(19) **Europäisches Patentamt**
**European Patent Office**
**Office européen des brevets**

(11) **EP 2 466 726 A1**

(12) **EUROPEAN PATENT APPLICATION**

(43) Date of publication:
**20.06.2012 Bulletin 2012/25**

(51) Int Cl.:
**H02K 1/27** (2006.01)

(21) Application number: **10195994.8**

(22) Date of filing: **20.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SIEMENS AKTIENGESELLSCHAFT**
**80333 München (DE)**

(72) Inventor: **Kimiabeigi, Mohammad**
**Hillsborough**
**Sheffield S6 1SE (GB)**

(54) **Permanent magnet for a permanent magnet machine**

(57)     A permanent magnet (5) for a permanent magnet machine (1) comprising a body (15) with two opposed end faces (16), wherein the magnetic force of the body (15) is lower in the area of the end faces (16).

# FIG 3

**Description**

The present invention relates in general to a permanent magnet machine like e.g. a generator. In particular, the present invention is directed to a permanent magnet, a rotor and a stator for a permanent magnet machine and a permanent magnet machine.

Generators generally have a moving rotor and a stationary stator to generate electrical energy. Either the rotor or the stator comprises a yoke with a permanent magnet. The other part comprises laminations with windings.

Magnet flux is an important parameter of a generator as it contributes to the torque of the generator. Leakages of magnet flux occur during operation of the permanent magnet machine and reduce the torque.

In the end regions of the generator i.e. at the axial ends of the generator magnet flux leakage occurs. It was realized to be significant especially for a direct drive generator in which high magnetic loading of the stator laminations is desired for high ratio of output power to weight. Due to high magnetic loading, the stator ferromagnetic material is magnetically saturated and this results in high value of flux leakage in the end regions of the permanent magnet where it is easier for the flux lines to close their path through the rotor and avoid linking the stator windings and thereby their contribution to torque decreases by getting closer to the end regions. Furthermore, in direct drive generators with large diameters and short axial length the ratio of the magnet flux leaking to the portion of the magnet flux that links the stator winding and contributes to the torque becomes more significant.

The situation described above does not apply solely to outer rotor direct drive generators but to all other types of permanent magnet machines as well. However, this situation is of importance especially for outer rotor direct drive generators.

In the literature it is proposed to shorten the length of the rotor compared to the stator. However, this method is only practical for inner rotor generators or motors where the rotor yoke underlying the magnets ends where the magnet ends, seen in an axial direction. However, external rotor generators are preferred to inner rotor generators due to their higher output power to weight ratio.

It is an object of the present invention to optimize the magnet flux of a permanent magnet machine.

This object is solved by the features of claims 1, 11, 12 and 13, respectively. The dependent claims offer further details and advantages of the invention.

In one aspect the invention is directed to permanent magnet for a permanent magnet machine, comprising a body with two opposed end faces, wherein the magnetic force of the body is lower in the area of the end faces. The idea is to maximize the main to leakage flux ratio by reducing the magnetic saturation of stator ferromagnetic material. This will be achieved by reducing the magnet strength near the end faces. The aforementioned ratio between the useful flux and the leakage flux is maximized and thereby the output power for the same magnet cost is improved depending on the magnet thickness, axial length and diameter of the generator air gap. The improvement in output power lies in the order by up to 10% more precisely by roughly 1-3 percent. In other terms, the magnet utilization is improved near the end faces or end regions. As the invention works independently from the mechanical/structure design i.e. it has no influence on the structure it can be easily implemented in a variety of different surroundings.

The permanent magnet may comprise two regions of low magnetic strength arranged at the end faces of the body, wherein the body may comprise material of high magnetic strength. Since the cost of weak magnets like for example ferrite or bonded magnets are lower than strong magnets like for example NdFeB, it is clear that using the permanent magnet results in the same output torque but with lower magnet cost.

A width and/or a height of the regions may correspond substantially to a thickness of the body or the permanent magnet. This dimension offers already a good reduction of magnet flux leakage. In a further optimization FE (Finite Elements) computation can be utilized to optimize the the dimension of the region.

The regions may be arranged inside the shape of the body. This leaves the shape or outer hull of the permanent magnet unchanged easing handling and design.

A height of the region may increase towards the end face of the body. It is proposed to decrease the magnet strength in a linear or non-linear function of the distance to the end face in such a way that the magnet is weakest where it reaches the end faces. The decrease in magnet strength can be easily obtained by the variable height of the region.

The height of the region at the end face may equal to the height or thickness of the body. In this case the amount of material having low magnetic force is maximized which increases the reduction of the magnetic strength and therewith the magnetic saturation of ferromagnetic material of the stator.

The height of the region at the end face may equal to a percentage of the height or thickness of the body. A preferred percentage can lie in the range of 25 to 75 %. With regard to the immunity of the weaker magnets against demagnetization due to the stator magnetic fields at short circuit faults, it is preferable to keep the weaker magnets farther from the stator. Accordingly, the percentage can be chosen between screening or shielding of the weaker magnets of the regions and the maximization of the reduction of the magnetic strength.

The region may have a triangular cross-section. This solution is relatively easy to manufacture and gives a smooth transition in magnetic strength while allowing screening of the weaker magnet through parts of the stronger magnet.

The region may have a rectangular cross-section. This approach is even easier to manufacture.

A height of the region may equal to a percentage of the height of the body. This keeps the weaker magnets farther from the stator screening them. A preferred percentage can lie in the range of 25 to 75 %.

In a further aspect the invention is directed to a rotor for a permanent magnet machine, comprising a permanent magnet as described above. The same advantages and modifications as described above apply here as well. For outer rotor direct drive generators which are becoming more common and are often used in large applications like wind turbines the invention is especially beneficial as they have a high magnetic loading of the stator laminations.

In a further aspect the invention is directed to a stator for a permanent magnet machine, comprising a permanent magnet as described above. The same advantages and modifications as described above apply here as well.

In an even further aspect the invention is directed to a permanent magnet machine comprising a stator, a rotor and a permanent magnet as described above. The same advantages and modifications as described above apply here as well. The invention is beneficial for outer rotor direct drive generators.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.

Fig. 1 illustrates a schematic cross-sectional view of a permanent magnet machine.

Fig. 2 illustrates a schematic view of a permanent magnet according to the invention.

Fig. 3 illustrates a schematic view of a further permanent magnet according to the invention.

Fig. 4 illustrates a schematic view of another permanent magnet according to the invention.

Fig. 5 illustrates a schematic view of yet another permanent magnet according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

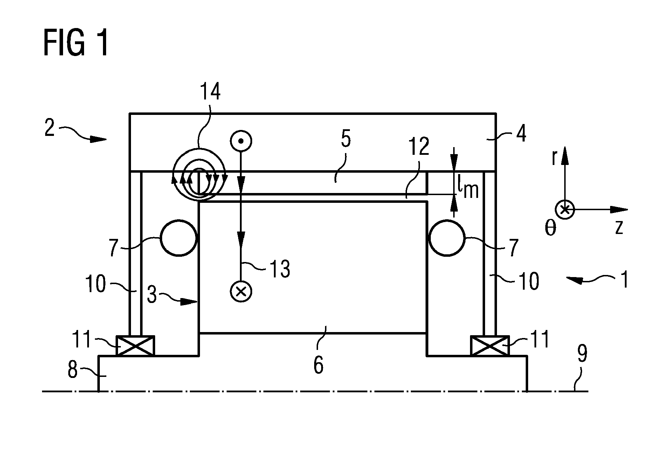

Figure 1 shows the permanent magnet machine 1 is in this exemplary case an outer rotor direct drive generator. The permanent magnet machine 1 has a rotor 2 and a stator 3. The rotor 2 comprises a yoke 4 which is carrying a permanent magnet 5. The stator 3 comprises a lamination pack 6 with windings. End windings 7 of the windings are depicted. The stator 3 is attached to a shaft 8 of the permanent magnet machine 1. The shaft 8 rotates about an axis of rotation 9. The rotor 2 is supported by vertical arms 10 which are each connected to a bearing 11. Between the rotating permanent magnet 5 and the stationary lamination pack 6 is a small air gap 12 of the permanent magnet machine 1.

A cylindrical coordinate system is depicted with an axial (z), radial (r) and tangential direction (θ).

Arrows show the direction of main flux 13 which contributes to the output torque of the permanent magnet machine 1. Out from the yoke 4 and through the permanent magnet 5 the main flux 13 passes through the air gap 12 and stator lamination pack 6. Then the main flux 13 continues its path by changing direction and going inwardly into the stator lamination pack 6 and alter coming back through the other pole in stator 3, air gap 12 and finally the rotor 2. It closes the cycle by re entering the initial magnet pole.

In general, a weak point of the machine design from a three dimensional aspect is seen in the axial end regions, especially of the permanent magnet 5. Leakage flux 14 leaks from the permanent magnet 5 into the rotor yoke 2 and back to the permanent magnet 5.

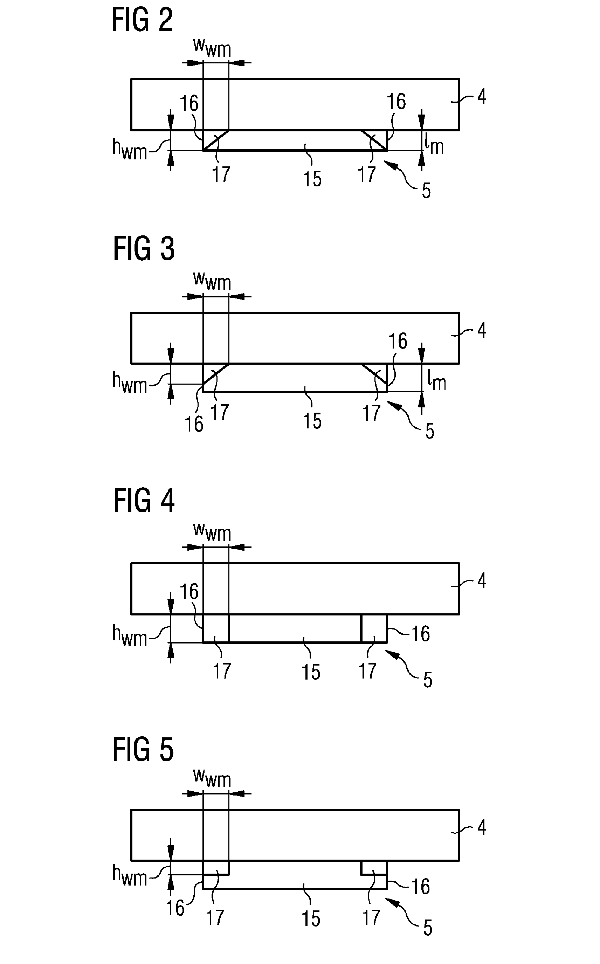

Figures 2 to 5 show the approach of the invention to reduce the magnetic saturation of the stator ferromagnetic material by reducing the magnet strength near end regions or end faces of the permanent magnet. First, the theoretical background is discussed.

The dependency of the main flux 13 and the leakage flux 14 on the permanent magnet 5 and other design parameters can be analytically described by the following equations 1 and 2 (main flux is the flux which contributes to torque).

$$B_{main} \propto \frac{H_m l_m}{(\delta_{gap} + \delta_{saturation})} \tag{1}$$

$$B_{leak} \propto \frac{H_m l_m}{(l_m + w_r + h_r)} \tag{2}$$

Where

$$\delta_{saturation} \propto \frac{H_m l_m}{(\delta_{gap} + w_{tooth})} \tag{3}$$

is the fictitious extra length of the air gap 12 due to the magnetic saturation of the stator 3;

$B_{main}$ indicates the main flux;

$B_{leakage}$ indicates the leakage flux;

$H_m$ indicates the magnetic field strength of the permanent magnet 5;

$W_{tooth}$ indicates the width of one stator tooth in tangential direction;

$l_m$ indicates the radial thickness of the permanent magnet 5; $h_r$ indicates the reluctance of the leakage flux path in radial direction;

$W_r$ indicates the reluctance of the leakage flux path in axial direction;

$\delta_{gap}$ indicates the radial length of the air gap 12.

Equation 4 describes the proportion between the main flux and the leakage flux:

$$\left(\frac{B_{main}}{B_{leak}}\right)\uparrow = \frac{l_m + w_r + h_r}{\delta_{gap} + \delta_{saturation}\downarrow} \tag{4}$$

The idea is to increase the main magnet flux, i.e. the flux that links the stator winding and contributes to output torque, by reducing the magnetic saturation of stator ferromagnetic material (equation 4). This will be achieved by reducing the magnet strength, i.e. $H_m$ in equation 3, near the end faces of the permanent magnet.

Figure 2 shows the yoke 4 and the attached permanent magnet 5 in greater detail. The permanent magnet 5 comprises a body 15 having a rectangular cross-section. The shape of the permanent magnet 5 is a body of revolution or a part of a body of revolution. The permanent magnet 5 and the body 15 as well have a height or a thickness $l_m$ in radial direction. The body 15 has two opposing end faces 16. The end faces 16 limit the body 15 in axial direction.

Two regions 17 of low magnetic force are arranged in the area of the end faces 16. A region 17 has a width $W_{wm}$ in axial direction and a height or thickness $h_{wm}$ in radial direction. If the region 17 covers the complete end face 16 the end face 16 of the body 15 is more like a virtual end face as it may not be present physically. Also, it is encompassed that the end face 16 belongs to the permanent magnet 5.

The two regions 17 may belong to the body 15 or to the permanent magnet 5, as it is a question of definition. One can say for example that the body 15 plus the two regions form the permanent magnet 5. It is also possible to say that the body 15 includes the regions 17. In Figure 2, the regions 17 are arranged inside the shape of the permanent magnet 5. The regions can also be arranged outside the shape of the permanent magnet 15 and are still in the area of the end faces 16.

The permanent magnet 15 can be seen as a hybrid magnet with high magnetic strength in the middle and continuously decreasing strength towards the end faces 16. This is achieved by having a central part with a strong magnet like e.g. NdFeB and two regions 17 with a weak magnet e.g. ferrite or bonded magnets.

The regions 17 in Figure 2 have a triangular shape. Here, the special form of an isosceles triangle is used, wherein the legs of the triangle are orientated at the end face 16 and at the yoke 4. Therefore, the radial thickness $h_{wm}$ of the weak magnet varies by distance from the end face 16, thereby this implementation is magnetically very effective.

The width $W_{wm}$ in axial direction and the height or thickness $h_{wm}$ in radial direction are identical. Further, the height or thickness $h_{wm}$ in radial direction equals to or roughly is the same as the height or thickness $l_m$ of the body 15 or the permanent magnet 5 in radial direction.

Figure 3 shows a further example of the permanent magnet 5 which is carried by the yoke 4. Here, the two regions 17 also have a triangular cross-section but in form of an irregular triangle. This implies that the width $W_{wm}$ in axial direction and the height or thickness $h_{wm}$ in radial direction are not identical. Instead, the height $h_{wm}$ is smaller than the width $W_{wm}$. The width $W_{wm}$ can equal to or roughly be the same as the height or thickness $l_m$ of the permanent magnet 5.

As the radial thickness $h_{wm}$ of the weak magnet varies by distance from the end face 16 this implementation is magnetically very effective. Furthermore, regarding the immunity of the weaker magnets against demagnetization due to the stator magnetic fields at short circuit faults, it is preferable to keep the weaker magnets farther from the stator which is achieved here.

This design implies that the end face 16 shows partly the permanent magnet 5 and partly the region 17, wherein the region 17 neighbours the yoke 4. The percentage or the ratio of the two parts can be chosen for example by FE computation. Criteria can be the magnetic effectiveness and the immunity of the weaker magnets against demagnetization i.e. the distance of the region 17 to the stator.

Figure 4 shows a permanent magnet 5 with regions 17 having a rectangular cross-section. The width $W_{wm}$ in axial direction and the height or thickness $h_{wm}$ in radial direction can be identical which would result in a quadratic cross-section. Further, the height or thickness $h_{wm}$ in radial direction equals to or is roughly the same as the height or thickness $l_m$ of the permanent magnet 5 in radial direction.

The implementation of Figure 4 may comprise lower manufacturing cost due to the simple rectangular shapes of the regions 17.

Figure 5 shows an arrangement similar to the one of Figure 4 as the regions 17 have a rectangular cross-section as well. Here, the height or thickness $h_{wm}$ of the regions 17 in radial direction is smaller than the height or thickness $l_m$ of the permanent magnet 5 in radial direction.

The width $W_{wm}$ in axial direction and the height or thickness $h_{wm}$ in radial direction are not identical. The width $W_{wm}$ can equal to or roughly be the same as the height or thickness $l_m$ of the permanent magnet 5. The width $W_{wm}$ in axial direction can be reduced to match to the height or thickness $h_{wm}$ in radial direction which would result in a quadratic cross-section.

This design implies that the end face 16 shows partly the permanent magnet 5 and partly the region 17, wherein the region 17 neighbours the yoke 4. The percentage or the ratio of the two parts can be chosen for example by FE computation. Criteria can be the magnetic effectiveness i.e. highest main flux to leakage flux ratio and the immunity of the weaker magnets against demagnetization i.e. the distance of the region 17 to the stator.

The alternatives of Figures 2 to 5 can be chosen based on the magnetic improvement together with the manufacturing cost. The magnetic improvement includes the magnetic effectiveness and the immunity of the weaker magnets against demagnetization.

From an implementation point of view, the strong and weak magnets may be assembled together after magnetization.

A combination of embodiments and details as shown in Figures 2 to 5 falls into the scope of the invention. For example, cross-sections with triangular and rectangular shape can be combined to form a more complex cross-section which may comprise a greater magnetic effectiveness.

In conjunction with Figures 2 to 5 linear cross-sections have been described. Non linear, curved or bended cross-sections are also within the scope of the invention.

In case, where only part of the permanent magnet machine 1 or a generator is shown and described like for example in Figure 2 it is self-evident that this description applies also to a complete permanent magnet machine or part of it like a rotor or stator.

The invention has been described for a permanent magnet machine 1 with an outer rotor 2. It is clear that the invention can also be utilized with a permanent magnet machine with inner rotor and outer stator.

**Claims**

**1.** Permanent magnet for a permanent magnet machine (1), comprising a body (15) with two opposed end faces (16), wherein the magnetic force of the body (15) is lower in the area of the end faces (16).

**2.** Permanent magnet according to claim 1, comprising two regions (17) of low magnetic strength arranged at the end faces (16) of the body (15), wherein the body (15) comprises material of high magnetic strength.

**3.** Permanent magnet according to claim 2, wherein a width ($W_{wm}$) and/or a height ($h_{wm}$) of the regions (17) corresponds substantially to a height ($l_m$) of the body (15).

**4.** Permanent magnet according to claim 2 or 3, wherein the regions (17) are arranged inside the shape of the body (15).

**5.** Permanent magnet according to one of claims 2 to 4, wherein a height ($h_{wm}$) of the region (17) increases towards the end face (16) of the body (15).

**6.** Permanent magnet according to claim 5, wherein the height ($h_{wm}$) of the region (17) at the end face (16) equals to the height ($l_m$) of the body (15).

**7.** Permanent magnet according to claim 5, wherein the height ($h_{wm}$) of the region (17) at the end face (16) equals to a percentage of the height ($l_m$) of the body (15).

**8.** Permanent magnet according to one of claims 2 to 7, wherein the region (17) has a triangular cross-section.

**9.** Permanent magnet according to one of claims 2 to 4, wherein the region (17) has a rectangular cross-section.

**10.** Permanent magnet according to claim 9, wherein a height ($h_{wm}$) of the region (17) equals to a percentage of the height ($l_m$) of the body (15).

**11.** Rotor for a permanent magnet machine (1), comprising a permanent magnet (5) according to at least one of claims 1 to 10.

**12.** Stator for a permanent magnet machine (1), comprising a permanent magnet (5) according to at least one of claims 1 to 10.

**13.** Permanent magnet machine comprising a stator (3), a rotor (2) and a permanent magnet (5) according to at least one of claims 1 to 10.

# FIG 1

## FIG 2

## FIG 3

## FIG 4

## FIG 5

Europäisches
Patentamt

European
Patent Office

Office européen
des brevets

## EUROPEAN SEARCH REPORT

**Application Number**

EP 10 19 5994

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 134839 A (HITACHI LTD) 12 May 2000 (2000-05-12) * abstract; figures 1, 2 * ----- | 1-4, 9-11,13 | INV. H02K1/27 |
| X | WO 03/085802 A1 (BOSCH GMBH ROBERT [DE]; DOMMSCH HANS-PETER [DE]; KASTINGER GUENTER [DE] 16 October 2003 (2003-10-16) * page 7, lines 21-27; figure 1 * ----- | 1-8,12, 13 | |
| X | US 2005/116568 A1 (SUGA MAKOTO [JP] ET AL) 2 June 2005 (2005-06-02) * paragraph [0037]; figure 6 * ----- | 1-8,12, 13 | |
| X | EP 1 701 428 A1 (LG ELECTRONICS INC [KR]) 13 September 2006 (2006-09-13) * figures 1, 5, 6 * ----- | 1-8,11, 13 | |
| X | EP 1 816 725 A1 (UNIV TEHERAN [IR]) 8 August 2007 (2007-08-08) * paragraph [0020]; figure 5 * ----- | 1-4,9, 10,12,13 | |
| X | DE 196 22 186 A1 (HILTI AG [LI]) 4 December 1997 (1997-12-04) * column 3, lines 28-38, 58-61; figure 2 * ----- | 1-4,9, 10,12,13 | **TECHNICAL FIELDS SEARCHED (IPC)** H02K |
| X | DE 42 24 757 A1 (BUDIG PETER KLAUS PROF DR SC T [DE]) 3 February 1994 (1994-02-03) * column 3, lines 12-21; figure 1 * ----- | 1-4, 9-11,13 | |
| X | US 3 422 294 A (PARKER ROLLIN J) 14 January 1969 (1969-01-14) * column 2, lines 62-67; figures 1, 4, 5 * ----- | 1-4,9, 10,12,13 | |

The present search report has been drawn up for all claims

| Place of search | Date of completion of the search | Examiner |
|---|---|---|
| Berlin | 1 July 2011 | Czogalla, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 10 19 5994

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2011

| Patent document cited in search report | | Publication date | Patent family member(s) | | Publication date |
|---|---|---|---|---|---|
| JP 2000134839 | A | 12-05-2000 | JP | 3670494 B2 | 13-07-2005 |
| WO 03085802 | A1 | 16-10-2003 | DE | 10215251 A1 | 16-10-2003 |
| | | | EP | 1495527 A1 | 12-01-2005 |
| | | | US | 2004263012 A1 | 30-12-2004 |
| US 2005116568 | A1 | 02-06-2005 | CN | 1622426 A | 01-06-2005 |
| | | | DE | 102004057199 A1 | 30-06-2005 |
| | | | JP | 4171914 B2 | 29-10-2008 |
| | | | JP | 2005185083 A | 07-07-2005 |
| EP 1701428 | A1 | 13-09-2006 | AU | 2005244582 A1 | 28-09-2006 |
| | | | CN | 1832300 A | 13-09-2006 |
| | | | JP | 2006254684 A | 21-09-2006 |
| | | | KR | 20060098822 A | 19-09-2006 |
| | | | RU | 2364017 C2 | 10-08-2009 |
| | | | US | 2006202580 A1 | 14-09-2006 |
| EP 1816725 | A1 | 08-08-2007 | NONE | | |
| DE 19622186 | A1 | 04-12-1997 | CN | 1167358 A | 10-12-1997 |
| | | | EP | 0812050 A1 | 10-12-1997 |
| | | | JP | 3911552 B2 | 09-05-2007 |
| | | | JP | 10056745 A | 24-02-1998 |
| | | | US | 5821661 A | 13-10-1998 |
| DE 4224757 | A1 | 03-02-1994 | NONE | | |
| US 3422294 | A | 14-01-1969 | NONE | | |

EPO FORM P0459

For more details about this annex : see Official Journal of the European Patent Office, No. 12/82